# DEMANDE DE BREVET EUROPEEN

(11) **EP 1 349 356 A1**
(43) Date de publication de la demande: **01.10.2003**
(21) Numéro de dépôt: 03290687.7
(22) Date de dépôt: 18.03.2003
(51) Int. Cl.: H04M 3/30

(54) **Appareil de test d'une liaison numérique à débit asymétrique**

(30) Priorité: 26.03.2002 FR 0203722
(71) Demandeur: FRANCE TELECOM, 75015 Paris (FR)
(72) Inventeur: Gadin, Christian, 93250 Villemonble (FR)
(74) Mandataire: Casalonga, Axel

(57) **Abrégé**

Cet appareil de test d'une liaison téléphonique numérique à débit asymétrique comporte, disposés dans un boîtier (40), un générateur (42) de signaux à basse fréquence adapté pour être raccordé à un bornier d'entrée d'un multiplexeur d'accès d'un central téléphonique et pour injecter dans ce dernier un signal simulant la présence d'une ligne téléphonique, un amplificateur (46) associé à un haut-parleur destiné à être raccordé à un bornier de sortie dudit multiplexeur et à récupérer et amplifier le signal émis par le générateur jusqu'à un niveau audible, et un modem (44) destiné à être raccordé avec ledit bornier de sortie pour tester un modem du multiplexeur d'accès par contrôle de synchronisation entre ces modems.

## Description

La présente invention concerne un appareil de test d'une liaison téléphonique numérique à débit asymétrique (ADSL).

De manière conventionnelle, pour procéder à une vérification du bon fonctionnement d'une liaison ADSL, il convient de brancher, au niveau du multiplexeur d'accès d'un central téléphonique, un ensemble d'équipements de télécommunications destinés à simuler l'installation d'un abonné.

Ainsi, il convient de réaliser une installation complète et provisoire de manière à faire un essai de fonctionnement identique à un essai qui serait effectué chez un abonné.

Comme on le conçoit, une telle technique de contrôle est relativement fastidieuse à mettre en oeuvre, et nécessite en outre de disposer de bornes d'alimentation en courant à proximité immédiate des points de raccordement des différents éléments entrant dans la constitution d'une telle installation.

Aussi, le but de l'invention est de pallier cet inconvénient et de fournir un appareil de test d'une liaison téléphonique ADSL constituant un ensemble unitaire portatif, et permettant de simplifier le contrôle du bon fonctionnement de la liaison.

Ainsi, selon un aspect de cet appareil de test, celui-ci comporte, disposés dans un boîtier, un générateur de signaux à basse fréquence selon une fréquence compatible avec la fréquence nominale de la liaison téléphonique, qui est adapté pour être raccordé en communication avec un bornier d'entrée d'un multiplexeur d'accès d'un central téléphonique et pour injecter dans ce dernier un signal simulant la présence d'une ligne téléphonique, un amplificateur associé à un haut-parleur et destiné à être raccordé en communication avec un bornier de sortie dudit multiplexeur d'accès et à récupérer et amplifier le signal émis par le générateur jusqu'à un niveau audible, et un modem destiné à être raccordé en communication avec ledit bornier de sortie pour tester un modem du multiplexeur d'accès par contrôle de synchronisation entre ces modems.

Cet appareil constitue dès lors un ensemble portatif pouvant être aisément installé pour simuler une installation de télécommunication d'un abonné.

Selon une caractéristique de cet appareil, l'amplificateur est associé à un organe de prise de ligne pilotant l'actionnement du générateur de signaux à basse fréquence.

Selon une autre caractéristique de cet appareil, il comporte en outre un filtre passe-bas disposé en entrée de l'amplificateur et destiné à éliminer la composante à haute fréquence dans le signal reçu en provenance dudit multiplexeur et à laisser passer la composante à basse fréquence correspondant à un signal de téléphonie.

De préférence, cet appareil comporte en outre des moyens de détection d'une ligne téléphonique raccordés en communication avec le bornier d'entrée du multiplexeur.

Selon un exemple de réalisation, les moyens de détection comportent un détecteur apte à détecter une tension de 48V traduisant le raccordement d'une ligne téléphonique et qui est intégré au générateur de signaux à basse fréquence.

De préférence, le modem comporte une borne de raccordement pour son raccordement à un ordinateur.

Avantageusement, l'appareil comporte en outre une batterie d'alimentation rechargeable associée à un circuit régulateur de courant de charge et à un circuit de contrôle du niveau de charge de la batterie.

D'autres buts, caractéristiques et avantages de l'invention ressortiront de la description suivante, donnée uniquement à titre d'exemple non limitatif, et faite en référence aux dessins annexés, sur lesquels :
- la figure 1 est un schéma synoptique d'une installation ADSL ;
- la figure 2 est une vue en perspective d'un appareil de test d'une liaison téléphonique ADSL conforme à l'invention ;
- la figure 3 est un schéma synoptique illustrant la structure générale de l'appareil de test de la figure 2 ;
- la figure 4 est un schéma illustrant la constitution du générateur de signaux à basse fréquence de l'appareil de test de la figure 3 ;
- la figure 5 est un schéma montrant la structure du circuit d'amplification de l'appareil de test de la figure 3 ; et
- la figure 6 montre la structure du filtre passe-bas entrant dans la constitution de l'appareil de test de la figure 3.

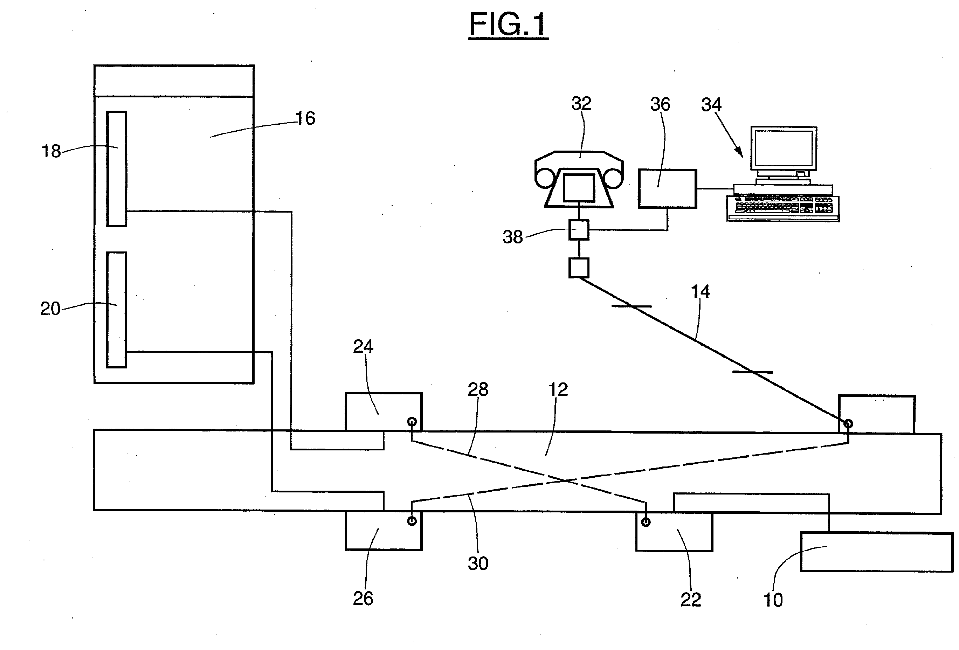

Sur la figure 1, on a représenté l'architecture générale d'une installation ADSL, de type classique.

Comme on le voit sur cette figure 1, une installation ADSL conventionnelle comporte, d'une part, un commutateur téléphonique 10 et, d'autre part, un répartiteur général 12 sur lequel sont raccordées un ensemble de lignes téléphoniques d'abonnés, telles que 14, et une baie de multiplexage 16 incorporant une carte de filtrage 18 ainsi qu'une carte modem 20.

Pour le raccordement de ces différents éléments, le répartiteur général 12 est pourvu d'une première réglette 22 à laquelle est raccordé l'autocommutateur 10 et destinée au raccordement d'équipements téléphoniques, une deuxième réglette 24 constituant une réglette d'entrée de l'étage ADSL du central téléphonique, et à laquelle est raccordée la carte de filtrage 18, et une troisième réglette 26, constituant une réglette de sortie ADSL du central téléphonique, à laquelle est raccordée la carte modem 20 de la baie de multiplexage.

Une première jarretière 28 s'étend entre la première réglette 22 et la deuxième réglette 24. Une deuxième jarretière 30 s'étend entre la troisième réglette 26 et les lignes téléphoniques 14.

A distance, c'est-à-dire dans les locaux de chaque abonné, des équipements téléphoniques, comprenant un poste téléphonique 32 et un micro-ordinateur 34 associé à un modem ADSL 36, sont raccordés à la ligne téléphonique 14 par l'intermédiaire d'un filtre 38 assurant une séparation entre les signaux à haute fréquence et les signaux vocaux transmis sur la ligne téléphonique 14.

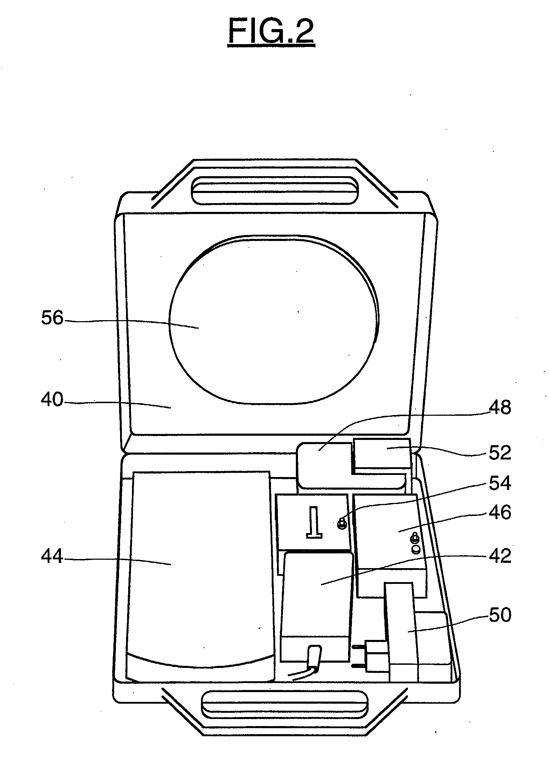

On va maintenant décrire, en référence aux figures 2 à 6, un appareil de test conforme à l'invention, destiné au contrôle de la liaison téléphonique numérique à débit asymétrique ADSL.

En se référant tout d'abord à la figure 2, on voit que cet appareil de test constitue un ensemble unitaire portatif et autonome.

Il comporte, placés dans un boîtier 40 : un générateur de signaux à basse fréquence 42 ; un modem ADSL 44 ; un amplificateur à basse fréquence 46 ; une batterie d'alimentation 48 associée à un chargeur 50 et à un régulateur de charge 52 ; et un boîtier de prise de ligne 54 incorporant une prise téléphonique.

L'ensemble est complété par un cordon de raccordement porté par un dévidoir 56 et destiné au raccordement de l'appareil de test, soit au niveau du répartiteur général, pour son raccordement en connexion avec le multiplexeur du central téléphonique, soit en tout point de la ligne téléphonique 14, voire chez l'abonné.

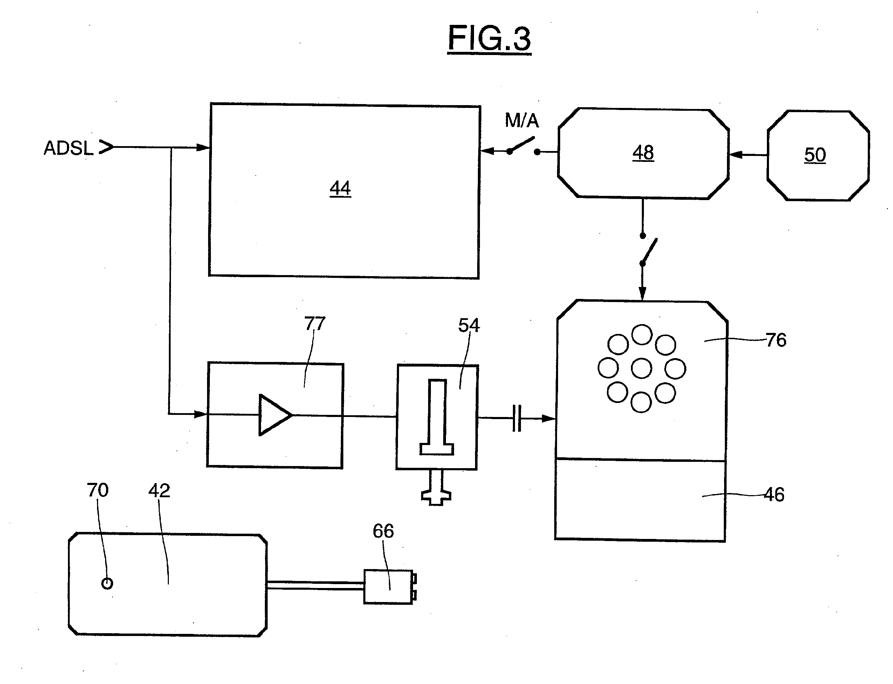

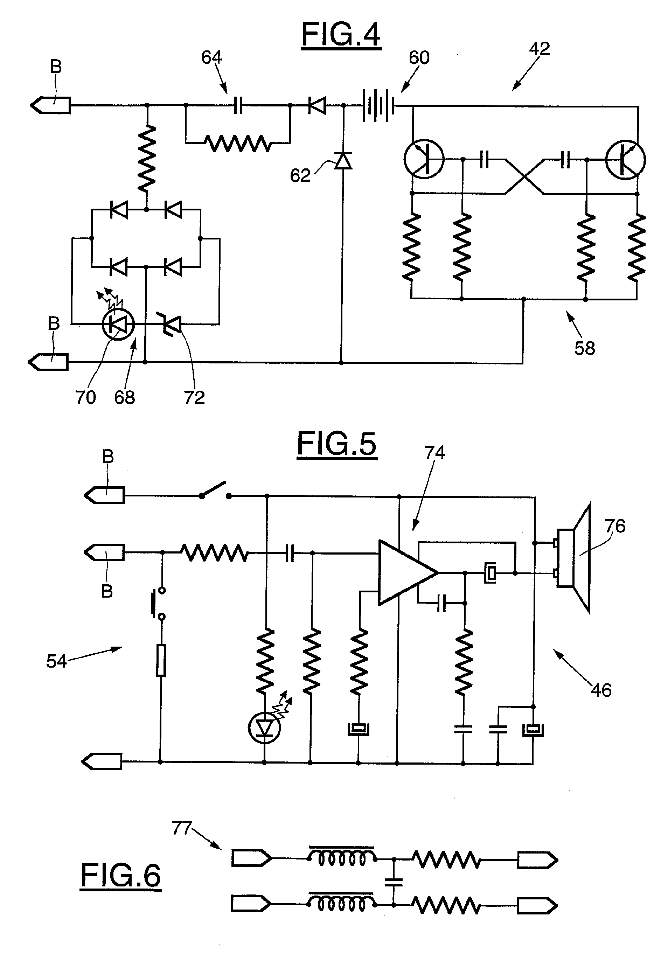

En se référant aux figures 3 et 4, en ce qui concerne le générateur de basse fréquence 42, celui-ci comporte essentiellement un étage multivibrateur 58 alimenté par une pile 60 et destiné à délivrer un signal à basse fréquence selon une fréquence compatible avec la fréquence nominale de la liaison téléphonique à tester, c'est-à-dire selon une fréquence comprise entre environ 300 à 3400 Hz.

Cet étage multivibrateur 58 est raccordé, par l'intermédiaire d'une diode de protection 62 et d'éléments 64 de limitation de courant, à une prise 66 destinée au raccordement du générateur 42 en communication avec la réglette d'entrée 24 du multiplexeur du central téléphonique ou, en variante, avec la première réglette 22 qui est destinée à la connexion d'un équipement téléphonique.

Ce générateur de signaux à basse fréquence est complété par un circuit 68 de détection de tension, de type classique, apte à détecter une tension de 48 volts sur la réglette sur laquelle il est branché, traduisant le raccordement d'une ligne téléphonique au répartiteur général.

Pour signaler à un opérateur la présence d'une telle tension, ce circuit de détection 68 est pourvu d'une diode électroluminescente 70.

Ce circuit de détection 70 incorpore en outre une diode Zener 72 disposée sur le trajet du courant entre les bornes de la pile 60 et destinée à empêcher toute décharge de celle-ci lorsque l'appareil de test n'est pas en fonctionnement.

Le générateur qui vient d'être décrit est destiné à coopérer avec l'amplificateur à basse fréquence 46 pour vérifier l'intégrité de la liaison entre les jarretières.

En référence à la figure 5, cet amplificateur à basse fréquence, qui est raccordé à une borne d'entrée B de l'appareil de test, incorpore essentiellement un étage d'amplification 74 de type classique, à base d'amplificateur opérationnel, dont l'une des bornes d'entrée est raccordée au boîtier de prise de ligne 54.

L'amplificateur à basse fréquence comporte en outre un haut-parleur 76 raccordé à la sortie de l'étage d'amplification 74.

L'amplificateur à basse fréquence 46 est destiné à être raccordé en communication avec la réglette de sortie ADSL 26 pour récupérer et amplifier les signaux véhiculés entre les deuxième et troisième réglettes, voire entre les première et troisième réglettes.

Comme visible sur la figure 3, un filtre passif passe-bas 77, à base d'inductance et dont la structure est représentée sur la figure 6, est raccordé entre les entrées du modem 44 et du boîtier de prise de ligne 54 ou entre le boîtier de prise de ligne et l'amplificateur 46 de manière à laisser passer vers le modem les composantes hautes fréquences correspondant à un contenu ADSL et à laisser passer vers l'amplificateur 46 les composantes basses fréquences.

En ce qui concerne le boîtier de prise de ligne, celui-ci destiné à simuler le décrochage d'un poste téléphonique. Il est raccordé entre le générateur de signaux à basse fréquence 42 et l'amplificateur 46 de sorte qu'une action sur le boîtier de prise de ligne engendre une mise en marche du générateur. Il est doté d'une prise téléphonique permettant le raccordement d'un appareil téléphonique, au cours d'une intervention.

Ainsi, pour procéder à un test de l'intégrité de la liaison entre les deuxième et troisième réglette, il convient de brancher le générateur à basse fréquence sur la deuxième réglette 24 et de brancher la borne d'entrée B de l'appareil sur la troisième réglette. Bien entendu, dans le cas où une ligne téléphonique est raccordée sur la première réglette, le générateur de signaux à basse fréquence n'est pas utilisé.

Lorsque le bouton-poussoir du boîtier de prise de ligne 54 est actionné, le signal émis par le générateur de basse fréquence est récupéré par l'amplificateur 74, amplifié par ce dernier jusqu'à un niveau audible, puis est fourni au haut-parleur 76.

La perception de ce signal traduit dès lors la continuité de la liaison entre les deuxième et troisième jarretières et indique que la modulation véhiculée sur la ligne téléphonique est correctement transmise.

Au contraire, si aucune tonalité n'est entendue, dans le cas où le générateur est branché sur la première réglette 22, il convient de tester l'intégrité de la première jarretière 28, de manière connue en soi.

Si cette jarretière 28 n'est pas défectueuse, il convient alors de changer la carte de filtrage 18 de la baie de multiplexage 16.

Enfin, pour procéder au contrôle du bon fonctionnement de la carte modem 20, on procède au raccordement du modem 44 sur la troisième réglette 26 de sortie ADSL, une bonne synchronisation entre ces modems traduisant alors l'intégrité de la carte modem 20. Enfin, le raccordement d'un ordinateur sur une borne de raccordement dont pourvu le modem de l'appareil de test permet de vérifier l'accès à un réseau internet et donc de contrôler que les ressources logicielles sont convenablement déclarées.

La description qui vient d'être faite s'applique au test d'une liaison numérique à débit asymétrique au niveau d'un central téléphonique.

On conçoit néanmoins qu'un tel test peut également être effectué au moyen de l'appareil de test selon l'invention, chez un abonné, en branchant directement l'appareil sur la prise téléphonique de l'abonné.

Dans ce cas, le poste téléphonique 32 de l'abonné peut-être brancher sur la prise téléphonique ménagée dans le boîtier 54 de prise de ligne.

On procède ensuite au raccordement du micro-ordinateur de l'abonné au modem 44 de l'appareil de test.

On effectue alors, de manière similaire à la procédure décrite précédemment, à une détection de toute discontinuité éventuelle dans la ligne téléphonique entre les première, deuxième et troisième réglettes de raccordement, de manière à contrôler le bon fonctionnement de la carte de filtrage 18, à un contrôle de la bonne synchronisation entre la carte modem 20 et le modem 44 de l'appareil de test, et à un contrôle de l'accès au réseau internet.

## Revendications

1. Appareil de test d'une liaison téléphonique numérique à débit asymétrique (ADSL), ledit appareil consistant en un ensemble unitaire portatif, **caractérisé en ce qu'**il comporte, disposés dans un boîtier (40), un générateur (42) de signaux à basse fréquence selon une fréquence compatible avec la fréquence nominale de la liaison téléphonique, qui est adapté pour être raccordé en communication avec un bornier d'entrée (24) d'un multiplexeur d'accès (12) d'un central téléphonique et pour injecter dans ce denier un signal simulant la présence d'une ligne téléphonique, un amplificateur (46) associé à un haut-parleur (76) et destiné à être raccordé en communication avec un bornier de sortie (26) dudit multiplexeur d'accès et à récupérer et amplifier le signal émis par le générateur jusqu'à un niveau audible, et un modem (44) destiné à être raccordé en communication avec ledit bornier de sortie pour tester un modem du multiplexeur d'accès par contrôle de synchronisation entre ces modems.

2. Appareil de test selon la revendication 1, **caractérisé en ce que** l'amplificateur est associé à un organe (54) de prise de ligne pilotant l'actionnement du générateur de signaux à basse fréquence.

3. Appareil de test selon l'une des revendications 1 et 2, **caractérisé en ce qu'**il comporte en outre un filtre passe-bas (77) disposé en entrée de l'amplificateur et destiné à éliminer la composante à haute fréquence dans le signal reçu en provenance dudit multiplexeur et à laisser passer la composante à basse fréquence correspondant à un signal de téléphonie.

4. Appareil de test selon l'une quelconque des revendications 1 à 3, **caractérisé en ce qu'**il comporte en outre des moyens de détection (68) d'une ligne téléphonique raccordés en communication avec le bornier d'entrée du multiplexeur.

5. Appareil de test selon la revendication 4, **caractérisé en ce que** les moyens de détection comportent un détecteur (68) apte à détecter une tension de 48V traduisant le raccordement d'une ligne téléphonique et qui est intégré au générateur de signaux à basse fréquence.

6. Appareil selon l'une quelconque des revendications 1 à 5, **caractérisé en ce que** le modem comporte une borne de raccordement pour son raccordement à un ordinateur.

7. Appareil selon l'une quelconque de revendications 1 à 6, **caractérisé en ce qu'**il comporte en outre une batterie d'alimentation rechargeable associée à un circuit régulateur de courant de charge et à un circuit de contrôle du niveau de charge de la batterie.
